(19) **Europäisches Patentamt / European Patent Office / Office européen des brevets**

(11) **EP 4 524 780 B1**

(12) **EUROPEAN PATENT SPECIFICATION**

(45) Date of publication and mention
of the grant of the patent:
**03.09.2025 Bulletin 2025/36**

(21) Application number: **23197535.0**

(22) Date of filing: **14.09.2023**

(51) International Patent Classification (IPC):
**G06F 18/27** (2023.01)     **G06V 10/82** (2022.01)
**G06V 20/64** (2022.01)

(52) Cooperative Patent Classification (CPC):
**G06F 18/27; G06V 10/82; G06V 20/64**

(54) **TRAINING METHOD FOR CATEGORY-LEVEL OBJECT POSE ESTIMATION**

TRAININGSVERFAHREN ZUR OBJEKTPOSENSCHÄTZUNG AUF KATEGORIEEBENE

PROCÉDÉ D'APPRENTISSAGE POUR ESTIMATION DE POSE D'OBJET AU NIVEAU DE CATÉGORIE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**19.03.2025 Bulletin 2025/12**

(73) Proprietors:
- **TOYOTA JIDOSHA KABUSHIKI KAISHA**
  **Toyota-shi, Aichi-ken, 471 8571 (JP)**
- **Technical University of Munich**
  **80333 München (DE)**

(72) Inventors:
- **GARATTONI, Lorenzo**
  **1140 BRUSSELS (BE)**
- **MEIER, Sven**
  **1140 BRUSSELS (BE)**
- **WANG, Pengyuan**
  **80333 MÜNCHEN (DE)**
- **BUSAM, Benjamin**
  **80333 MÜNCHEN (DE)**

(74) Representative: **Cabinet Beau de Loménie**
**103, rue de Grenelle**
**75340 Paris Cedex 07 (FR)**

(56) References cited:
- **WANG PENGYUAN ET AL: "CroCPS: Addressing Photometric Challenges in Self-Supervised Category-Level 6D Object Poses with Cross-Modal Learning", 21 November 2022 (2022-11-21), XP093111042, Retrieved from the Internet <URL:https://bmvc2022.mpi-inf.mpg.de/0390.pdf> [retrieved on 20231211]**
- **BA YUNHAO ET AL: "Computer Vision - ECCV 2020 : 16th European Conference, Glasgow, UK, August 23-28, 2020, Proceedings, Part XXIV", vol. 12369, 23 August 2020 (2020-08-23), Cham, pages 554 - 571, XP093111180, ISSN: 0302-9743, ISBN: 978-3-030-58586-0, Retrieved from the Internet <URL:https://link.springer.com/content/pdf/10.1007/978-3-030-58586-0.pdf>**
- **CHEN WEI ET AL: "FS-Net: Fast Shape-based Network for Category-Level 6D Object Pose Estimation with Decoupled Rotation Mechanism", 2021 IEEE/CVF CONFERENCE ON COMPUTER VISION AND PATTERN RECOGNITION (CVPR), IEEE, 20 June 2021 (2021-06-20), pages 1581 - 1590, XP034006492, DOI: 10.1109/CVPR46437.2021.00163**

## EP 4 524 780 B1

## Description

BACKGROUND OF THE INVENTION

1. Field of the Invention

The invention relates to the field of object pose estimation. In particular, the invention relates to category-level object pose estimation.

2. Description of Related Art

Pose estimation is a sub-field of object recognition that relates to the task of determining a pose of an object in a given space. The pose estimation generally involves estimating the position and orientation parameters that define the spatial configuration of the object with respect to a reference coordinate system.

Accurate pose estimation is crucial for robotic applications, especially in household environments. For many of such applications such as grasping and manipulation, it is important to estimate pose of various objects belonging to a given category. Therefore, recent trends shift from instance-level pose estimation (wherein each instance of an object is treated as a separate entity subject to pose estimation) to category-level pose estimation (wherein the goal is to estimate the pose of a class of objects, such as "chairs" or "cars", without distinguishing between individual instances.).

However, category-level pose estimation is particularly challenging as the object shape and color may vary significantly within the same category. As a result, large amount of annotated training data are required to train the category-level pose estimation networks, which limits the practicability of the methods.

Known methods generally address this problem by using synthetic training datasets with synthetic labels to supervise the training of the pose estimation network, see [REF 4]. However, for the sake of simplicity, the synthetic training datasets generally ignore a combination of realistic factors (for example material or sensor noise) which leads to domain gaps between the synthetic datasets and the real dataset subject to pose estimation. Such domain gaps may be reduced by using domain adaptation techniques. In particular, some methods implement domain adaptation via self-supervision based on depth data acquired from depth sensors, see [REF3].

Such methods fail when directed to pose estimation of photometrically challenging objects with complex textures, such as transparent objects. In particular, depth sensors fail to measure accurate depth images of transparent surfaces.

There is thus a need for category-level pose estimation methods solving problems of the prior art.

The following references disclose various methods relating to pose estimation.

[REF 1] CHEN, Wei, JIA, Xi, CHANG, Hyung Jin, et al. Fs-net: Fast shape-based network for category-level 6d object pose estimation with decoupled rotation mechanism. In : Proceedings of the IEEE/CVF Conference on Computer Vision and Pattern Recognition. 2021. p. 1581-1590.

[REF 2] GAO, Daoyi, LI, Yitong, RUHKAMP, Patrick, et al. Polarimetric pose prediction. In : Computer Vision-ECCV 2022: 17th European Conference, Tel Aviv, Israel, October 23-27, 2022, Proceedings, Part IX. Cham : Springer Nature Switzerland, 2022. p. 735-752.

[REF 3] MANHARDT, Fabian, WANG, Gu, BUSAM, Benjamin, et al. CPS++: Improving class-level 6D pose and shape estimation from monocular images with self-supervised learning. arXiv preprint arXiv:2003.05848, 2020.

[REF 4] WANG, He, SRIDHAR, Srinath, HUANG, Jingwei, et al. Normalized object coordinate space for category-level 6d object pose and size estimation. In : Proceedings of the IEEE/CVF Conference on Computer Vision and Pattern Recognition. 2019. p. 2642-2651.

[REF 5] WANG, Pengyuan, GARATTONI, Lorenzo, MEIER, Sven, et al. CroCPS: Addressing Photometric Challenges in Self-Supervised Category-Level 6D Object Poses with Cross-Modal Learning. 2022. In : Proceedings of the British Machine Vision Conference. 2022.

[REF 6] HE, Kaiming, ZHANG, Xiangyu, REN, Shaoqing, et al. Deep residual learning for image recognition. In : Proceedings of the IEEE conference on computer vision and pattern recognition. 2016. p. 770-778.

[REF 7] BA, Yunhao, GILBERT, Alex, WANG, Franklin, et al. Deep shape from polarization. In : Computer Vision-ECCV 2020: 16th European Conference, Glasgow, UK, August 23-28, 2020, Proceedings, Part XXIV 16. Springer International Publishing, 2020. p. 554-571.

[REF 8] ZHANG, Chaoning, ZHENG, Sheng, LI, Chenghao, et al. A Survey on Segment Anything Model (SAM): Vision Foundation Model Meets Prompt Engineering. arXiv preprint arXiv:2306.06211, 2023.

[REF 9] LI, Zhenyu, CHEN, Zehui, LIU, Xianming, et al. Depthformer: Exploiting long-range correlation and local information for accurate monocular depth estimation. arXiv preprint arXiv:2203.14211, 2022.

[REF 10] KINGMA, Diederik P. et BA, Jimmy. Adam: A method for stochastic optimization. arXiv preprint ar-

Xiv:1412.6980, 2014.

[REF 11] DENNINGER, Maximilian, SUNDERMEYER, Martin, WINKELBAUER, Dominik, et al. Blenderproc. arXiv preprint arXiv:1911.01911, 2019.

[REF 12] JAKOB, Wenzel, SPEIERER, Sébastien, ROUSSEL, Nicolas, et al. DR. JIT: a just-in-time compiler for differentiable rendering. ACM Transactions on Graphics (TOG), 2022, vol. 41, no 4, p. 1-19.

[REF 13] JUNG, HyunJun, WU, Shun-Cheng, RUHKAMP, Patrick, et al. HouseCat6D--A Large-Scale Multi-Modal Category Level 6D Object Pose Dataset with Household Objects in Realistic Scenarios. arXiv preprint arXiv:2212.10428, 2022.

[REF 14] RANFTL, René, BOCHKOVSKIY, Alexey, et KOLTUN, Vladlen. Vision transformers for dense prediction. In : Proceedings of the IEEE/CVF international conference on computer vision. 2021. p. 12179-12188.

[REF 15] FUJI TSANG, Clement et al., Kaolin: A pytorch library for accelerating 3d deep learning research. https://github.com/NVIDIAGameWorks/kaolin, 2022.

[REF 16] GROUEIX, Thibault, FISHER, Matthew, KIM, Vladimir G., et al. A papier-mâché approach to learning 3d surface generation. In : Proceedings of the IEEE conference on computer vision and pattern recognition. 2018. p. 216-224.

## SUMMARY OF THE INVENTION

According to aspects of the present disclosure, a training method according to claim 1 is provided.

In the present description, an image comprising color information (color image) may refer indifferently to images with any type of color information, for example RGB images, grayscale images, and black and white images.

With the present method, it is possible to train a model for category-level pose estimation of objects with complex textures, such as transparent objects, without requiring accurate depth information on the object. During training, polarization information of the object is used to enhance surface normal estimation of the object and the surface normal estimation is used to form a self-supervision signal in order to reduce domain gaps between the synthetic datasets used for training and real datasets on which the trained network is to be used.

Advantageously, after training, the first neural network can generate pose estimation of objects from input images without requiring polarization information, which is particularly beneficial due to the additional technical requirements related to the acquisition of polarization images. The present method only needs polarization images at a training time. This stands in stark contrast with methods of the prior art, such as the method disclosed in [REF 2], which require polarization information at an inference time.

In color images, surface normals of transparent object may be blurry because color information of transparent objects is strongly influenced by the background. Conversely, the polarization images capture reflections on objects surfaces, which are less influenced by the background. The present method advantageously uses polarization information to provide surface normal estimation of the objects in order to enhance the pose estimation.

Therefore, the present method is especially effective for providing accurate category-level pose estimation for transparent objects, and thereby improves over the methods of the prior art which fail to estimate the pose of transparent objects (see [REF 1] and [REF 5]).

The second self-supervision signal may be based on a distance between a contact edge point cloud derived from the contact edge estimation (projected to the predicted depth image of the object) and a rendered point cloud derived from the pose estimation and the latent code.

According to embodiments, the step of training the first the neural network comprises completing the depth information of the object in order to generate a predicted depth image of the object, wherein the pose estimation and the latent code are based on the predicted depth image of the object.

Depth completion allows for improving the depth information of the object, which is especially important for objects with complex textures such as transparent objects. Depth completion may be implemented, for example, by using a vision transformer-based neural network (see [REF 14]).

According to embodiments, the step of refining the pose estimation of the object uses a third self-supervision loss based on the predicted depth image of the object and a rendered depth image derived from the latent code and the object pose estimation. The rendered depth image may be a reconstructed image obtained from a rendering engine (renderer) based on the latent code and the object pose estimation.

According to embodiments, the step of refining the pose estimation of the object uses a fourth self-supervision loss based on a rendered object mask and on a ground truth mask of the object, the rendered object mask being derived from the pose estimation and from the latent code. A mask may be a filter configured to mask some parts of the image (e.g. some pixels) while leaving others visible. Specifically, a rendered object mask may be configured to process a rendered image of the object (obtained from the object pose) in order to leave the object visible and mask everything else, including the background and other objects based on polarization information obtained from the object.

The fourth self-supervision signal may represent a difference between a ground truth mask of the object and a rendered mask obtained from the estimated pose of the object.

According to embodiments, the training of the first neural network comprises using shape priors representative of the object category in order to constrain the pose estimation.

According to embodiments, the training of the first neural network is supervised using ground truth data from a synthetically generated dataset comprising annotated object poses computed from a renderer applied to objects belonging to the object category.

According to embodiments, the training of the second neural network comprises using surface normal priors representative of the object category in order to constrain the surface normal estimation.

According to embodiments, the surface normal priors comprise diffuse surface normal priors related to diffuse reflection of light by an object belonging to the object category, and/or specular surface normal priors related to specular reflection of light by an object of the object category.

According to embodiments, the polarization information of the object comprises a degree of linear polarization (DOLP) and/or an angle of linear polarization (AOLP). Such polarization information may be calculated, for example, for each pixel of the input image. The polarization information may comprise four RGB images with different intensities from which the DOLP and AOLP can be calculated, see [REF 5].

According to embodiments, the training of the second neural network is supervised using ground truth data from a synthetically generated dataset comprising annotated polarization information, wherein the annotation comprises surface normal priors of objects belonging to the object category.

According to embodiments, the second neural network is frozen (fixed) before the step of refining the first neural network.

According to embodiments, the object is a transparent object. A transparent object may be defined as an object that allows visible light to pass through, such as objects made of glass and/or clear plastic. The present method may be used to train neural networks for pose estimation of objects with various textures; however the present method is particularly efficient when applied to pose estimation of transparent objects.

The present disclosure is further related to a computer program set including instructions for executing the steps of the above described method when said program set is executed by a computer. This program can use any programming language and take the form of source code, object code or a code intermediate between source code and object code, such as a partially compiled form, or any other desirable form.

The present disclosure is further related to a recording medium readable by a computer and having recorded thereon a computer program including instructions for executing the steps of the above described method. The recording medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the recording medium can be an integrated circuit in which the program is incorporated, the circuit being adapted to execute the method in question or to be used in its execution.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a diagram representing aspects of a training method according to the present disclosure;
FIG. 2 is a block diagram illustrating a flow of data in a training method according to the present disclosure;
FIGS. 3-4 are tables illustrating advantages of the method according to the present disclosure over other methods.

DETAILED DESCRIPTION OF EMBODIMENTS

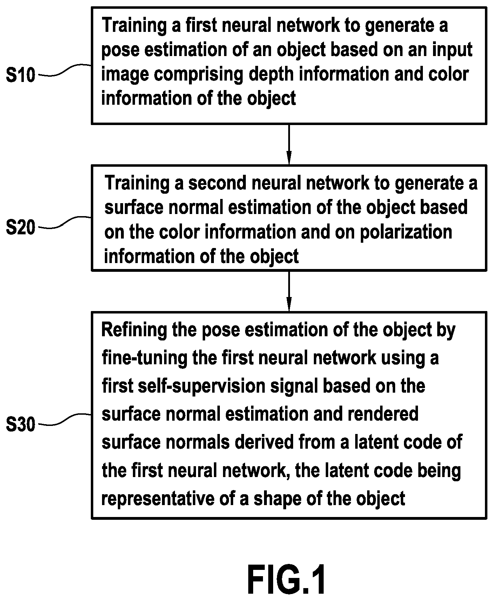

Training methods for a category-level pose estimation model, which constitute exemplary embodiments of the present disclosure, are now going to be presented in relation with FIGS. 1-4.

According to embodiments, the present disclosure relates to a computer-implemented training method comprising the steps represented in FIG. 1. Specifically, the method may comprise the steps of: S10 training a first neural network to generate pose estimation of an object based on an input image comprising color information and depth information of the object; S20 training a second neural network to generate a surface normal estimation of an object based on ; and S30 refining the pose estimation of the object by fine-tuning the first neural network using a first self-supervision signal based on the surface normal estimation of the object and rendered surface normals derived from the latent code.

Generally speaking, a purpose of the method is to train a category-level pose estimation model so that, once trained, the model can generate accurate object pose estimation from RGB-D images (images comprising color information and depth information). In particular, once trained, the neural network can successfully generate poses of transparent objects.

The method may proceed by training the model using a synthetic training dataset comprising color information, depth information and polarization information on objects. Further, the trained model is adapted through self-supervision, to the real dataset on which pose estimation is to be performed.

Advantageously, once the model is trained, polarization information is not required at inference time.

In the method, the model may comprise a first neural network that is trained to generate pose estimation of objects from color and depth information of the object and a second neural network that is trained to generate surface normal estimation of objects from color information and polarization information. The first neural network is further trained, under self-supervision, using the surface normals predicted from the second neural network.

In step S10, the first neural network is trained to generate pose estimation of an object from input RGB-D images. The training is performed using a training dataset comprising input images with color and depth information of the object. The input images of the training dataset may be labelled with ground truth poses of the object so that the training is supervised. In embodiments, the training dataset used for training the first neural network may be a synthetic dataset.

In embodiments, the first neural network may be an Fs-Net neural network, see [REF 1].

In step S20, the second neural network is trained to generate a surface normal estimation of an object from input images. The training may be performed using a training dataset comprising input images with color information, depth information, and polarization information on the object.

The input images of the training dataset may be labelled with ground truth surface normals so that the training is supervised. Further, the training dataset used for training the second neural network may be a synthetically generated dataset.

In embodiments, the second neural network may comprise a transformer-based neural network.

In step S30, the first neural network is further trained (fine-tuned) using one or more self-supervision signals. In particular, a self-supervision signal may be based on the polarization information. The fine-tuning of the first neural network is performed in order to reduce the domain gap between the synthetic dataset used during training and the real datasets on which the pose estimation of transparent objects is to be implemented. The real dataset generally comprises input images with RGB information, depth information, and polarization information. Further, the real dataset does not comprise labels (annotations) and self-supervision is used to generate pseudo-labels based on the polarization information.

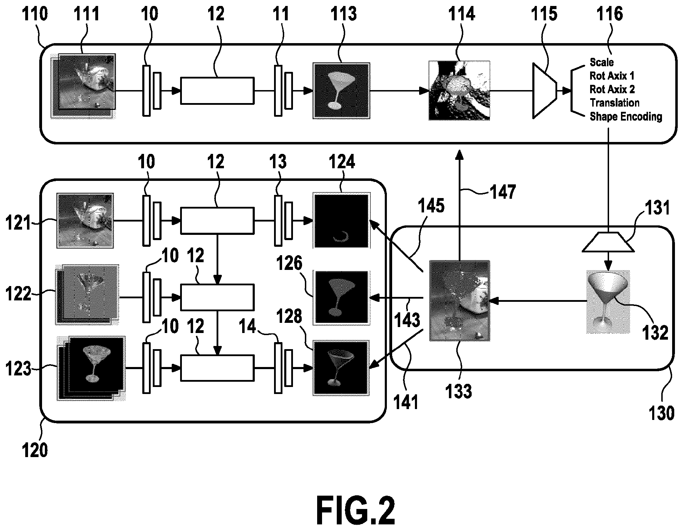

With reference to FIG. 2, according to embodiments, architecture of the present method is structured around three main blocks 110, 120, 130. The pose estimation block 110 relates to the action of a first neural network configured to generate estimations 116 of quantities related to the object from an input RGB-D image 111 (including pose estimations).

The estimations 116 comprise the pose of the object, and the shape or a shape encoding of the object. The shape encoding of the object is a latent code of the second neural network representative of the shape of the object. In embodiments, the pose of the object may comprise the object translation and the object rotation according to several axes. Further, the estimations 116 may also comprise the scale of the object and the mask of the object.

The RGB-D image is an image comprising color "RGB" (red/green/blue) information and depth information. The input RGB-D image may be part of a training dataset that is synthetically generated with methods similar, for example, to [REF 5].

In embodiments, the input depth information from the input RGB-D image 111, which is generally inaccurate for transparent objects, is completed with a depth completion network in order to obtain a predicted depth 114 of the object (i.e. the predicted object point cloud). In particular, a vision transformer may be used to better learn global information on the input depth image. The SigLoss in DepthFormer may be applied as training loss, see [REF 9].

Once the predicted depth 114 is obtained, estimations 116 are provided. The estimation may be implemented by a neural network 115 such as the GCN3d network disclosed in [REF 1].

Since the present method is directed to the training of category-level pose estimation models, a shape prior may be also used during training of the pose estimation network, see for example [REF 3].

The first neural network may comprise, for example, convolutional neural networks 10, 11, and a transformer 12. In particular, the first neural network may be configured to implement depth completion from RGB-D image 111, in order to predict object depth 113, and then generate estimations 116 comprising the pose, scale, and shape of the object.

The surface normal estimation block 120 relates to the action of a second neural network configured to generate contact edges estimation 124 and surface normal estimation 128 of an object from an input image comprising RGB information 121 and polarization information 122. Further, surface normal priors 123 may be used to overcome possible ambiguity due to diffuse or specular reflections and then enhance the surface normal estimation 128 (see [REF 7]). In particular, the normal priors may comprise a normal prior related to diffuse reflection and two normal priors related to specular reflection. In embodiments, the normal priors 123 are derived from the polarization information 122 which comprises, for example, a degree of linear polarization (DOLP) and/or angle of linear polarization (AOLP).

The second neural network may comprise, for example, convolutional neural networks 10, 13, 14 and transformers 12. In particular, the second neural network may be configured to implement data fusion from the RGB information 121, the polarization information 122, and the normal priors 123 in order to predict the surface normals 128 and the contact edges 124.

In embodiments, an input image comprising RGB data is fed to a convolutional network 10 (for example a ResNet34 network [REF 6]) to get a RGB feature map which is then projected to a given number of dimensions, for example 512 dimensions. The feature map is then flattened, transposed and complemented with position encodings. The obtained feature maps are then processed with one or more transformers and fed into segmentation heads for predicting contact edges and self-occlusion edges. Further, the RGB features maps obtained from the transformers may be sent to other layers of neural networks to be fused with features maps derived from other inputs.

Polarization information 122, such as AOLP and DOLP, are extracted from the input image and processed with one or more neural networks in order to obtain polarization features maps. The polarization feature maps are fused with the RGB feature maps. The polarization information may be derived, for example, from a plurality of RGB images with different polarization angles, see [REF 5].

The self-supervision block 130 relates to the adaptation of the pre-trained first neural network to a real dataset via self-supervision. In particular, self-supervision losses are evaluated and the first neural network is further trained (fine-tuned) in order to minimize such losses. The self-supervision losses are constructed in order to lead to an alignment of the properties 141, 143, 145, 147 derived from the estimations 116 of the first neural network to the predictions 124, 128 of the second neural network and the depth prediction 114.

In embodiments, based on the estimations 116 from the first neural network, in particular on the object pose and a latent code representative of the shape of the object (shape encoding), the normalized object shape 132 is recovered by a decoder 131. An object point cloud is then calculated from the mesh vertices of the normalized object shape.

The object point cloud is multiplied by the estimated scale, and transformed by the estimated pose to obtain an object point cloud in real-world coordinates, also referred to as reconstructed point cloud in the present description. The reconstructed point cloud is used to form an object mesh that is fed to a differentiable renderer in order to obtain a rendered depth image 133. From this rendered image 133, can be extracted several properties 141, 143, 145, 147 that are used to derive the self-supervision losses. The properties may comprise rendered surface normals 141, rendered mask probability image 143, rendered contact edge point cloud 145, and rendered depth 147.

In embodiments, the object mesh is assembled using AtlasNet algorithms (see [REF 16]). Further, the renderer may be similar to the renderer disclosed in [REF 15].

In embodiments, a normal loss, $L_{Normal}$, a mask loss, $L_{Mask}$, a contact edge loss, $L_{Edge}$, and a geometric loss, $L_{Geometric}$, may be derived from the rendered image 133 so that the total loss self-supervision loss can be expressed as follows:

$$L = L_{Edge} + L_{Mask} + L_{Geometric} + L_{Normal} \qquad \text{(Equation 1)}$$

In Equation 1, the total self-supervision loss is a linear sum of all the self-supervisions losses with weights equal to 1. However, the present disclosure also relates to embodiments wherein the weights are different than one, with relative weights that can have any chosen value. In particular, the weights may be hyperparameters that can be adjusted prior to the self-supervised training. Further, the total self-supervision loss may be a function of two or more of these self-supervision losses that is not a linear sum.

The contact edge loss is advantageously constructed in order to ensure consistency between the contact edge point cloud, $P_{contact}$, formed by contact edges 124 predicted with the second neural network, and the rendered contact edges derived from the reconstructed object point cloud, $P_r$, via the rendered image 133.

In particular, it may be assumed that each point in the contact edge point cloud, $P_{contact}$, which is projected to 3D based on the predicted edge mask (predicted by the second neural network) and the input depth 111, should be close to the reconstructed point cloud 133, $P_r$.

The contact edge loss, $L_{Edge}$, is therefore expressed as follows.

$$L_{Edge} = \frac{1}{|P_{contact}|} \sum_{v \in P_{contact}} \min_{\bar{v} \in P_r} \|v - \bar{v}\|_2 + \min_{\bar{v} \in P_r} \left( \min_{v \in P_{Contact}} \|v - \bar{v}\|_2 \right)$$

$$\text{(Equation 2)}$$

The normal loss, $L_{Normal}$, may be constructed to compare the surface normal estimation 128 (obtained from the polarization information 123 via the second neural network) to the surface normals calculated from the rendered image 133.

In embodiments, the normal loss, $L_{Normal}$, may therefore be expressed as:

$$L_{Normal} = \frac{1}{|A|} \sum_{N_p, N_p \in A} \left(1 - N_p \cdot N_r\right)$$

(Equation 3)

In Equation 3, $A$ is the region of intersection between the mask derived from the rendered depth image 133 and a known ground truth mask 126. $N_p$ is the predicted surface normals 128 obtained from the second neural network. $N_r$ is the rendered surface normals 141 derived from the rendered image 133.

In order to obtain the rendered surface normals, $N_r$, the depth is mapped to the reconstructed 3D point cloud with intrinsic camera parameters and a spatial gradient, $(x_r, y_r)$, is calculated. In particular, the rendered surface normals, $N_r$, may be expressed as follows:

$$N_r = \frac{\langle x_r, y_r, x_r \times y_r \rangle}{\|x_r, y_r, x_r \times y_r\|_2}$$

(Equation 4)

The mask loss may be constructed to compare a reference object mask 126 to the mask probability image derived from the rendered image 133. In embodiments, the reference object mask 126 may comprise ground truth object masks 126 or object masks obtained with large language models such as Grounded SAM (see [REF 8]).

In embodiments, the mask loss, $L_M$, may be calculated with a focal mask loss with the following expression.

$$L_M = \frac{1}{|M_{gt}|} \sum_{p \in M_{gt}} -(1-p)^\gamma \log(p) + \frac{1}{|M_{gt}^C|} \sum_{p \in M_{gt}^C} p^\gamma \log(1-p)$$

(Equation 5)

In Equation 5, $M_{gt}$ is the ground truth object mask 126, $M_{gt}^C$ is the area outside the object mask, and $p$ is the predicted value in the rendered mask probability image (derived from the rendered image 133). Further, $\gamma$ is a parameter that may be set to 2.

The geometric loss, $L_G$, may be constructed to compare the predicted depth image 114 to the rendered depth image 133. In particular, the predicted depth 114 may be projected to a point cloud, $P_p$, and a predict-render consistency loss may be evaluated between such point cloud and the rendered depth.

Therefore, the geometric loss, $L_G$, may be expressed as follows:

$$L_G = \frac{1}{|P_p|} \sum_{v \in P_p} \min_{\bar{v} \in P_r} \|v - \bar{v}\|_2$$

(Equation 6)

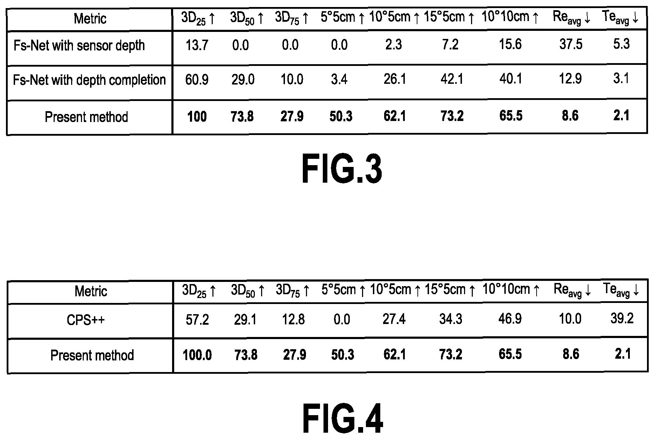

FIGS. 3-4 shows results of the present method compared to methods of the prior art.

Performance of the methods is evaluated using standard metrics (see for example [REF 5]). In particular, such metrics include: Mean precision of 3D intersection over union at thresholds of 25%, 50%, 75% ($3D_{25}$, $3D_{50}$, $3D_{75}$); Accuracy of rotations and translations at different angles in degrees and at different length in centimeters ($5°5cm$, $10°5cm$, $10°10cm$); Average rotation error ($Re_{avg}$), and average translation error ($Te_{avg}$).

The up/down arrows next to the metrics indicates that the performance of the method is considered higher when the value of the criteria is higher/lower, respectively.

The table in FIG. 3 shows results obtained with the present method (row 4) compared to a baseline method of the prior art, denoted as Fs-Net, which uses sensor depth (row 2). The Fs-Net method is a category-level pose estimation baseline method relying on sensor depth to enhance pose estimation (see [REF 1]). The Fs-Net method is unable to estimate poses of objects with complex textures, including transparent objects. Therefore, the present method is also compared with a modified version of the Fs-Net algorithm (row 3). The modified version is enhanced with a depth completion network (see [REF 14]) in order to complement the inaccurate sensor depth (row 3).

To test the performance of the methods, a synthetic dataset is used for training pose estimation networks and a real dataset is used for self-supervision and for evaluation of the performances.

The used synthetic dataset comprise a set of 1400 synthetic glass models of different shapes and sizes modelled by artists to represent the object category to be learned. The objects are rendered by BlenderProc (see [REF 11]) with physical positioning and the material is set as transparent in Blender®. For rendering of synthetic polarization images, the identical scene information including objects, environments and light sources are transferred and re-rendered in Mitsuba3 (see [REF 12]), assuming the objects are mainly made of a dielectric material with a constant environment emitter.

During the rendering, a polarization filter is applied 2 cm in front of the camera. The angles of the polarization filter are set to 45, 90, 135 and 180 degrees and the scene is rendered four times with the corresponding filter angles to simulate the data obtained from a real polarization camera.

The used real dataset is created by capturing real data. In particular, sample glass objects are first coated with temporary opaque material and scanned to obtain a 3D mesh. The objects are then placed in the real world scene, and keypoints are tipped with an augmented reality (AR) tracking device and the pose of the object is registered in the scene. A multi-modal camera setup is used to capture polarization and depth images as well as the camera pose which is obtained using the AR tracking device. The vision system comprises a Polarization camera, and a Depth camera synchronized to the polarization camera. The real dataset consists of 3 sequences including glasses of different shapes and sizes, with in total 325 images. The training and testing are split with 80: 20 ratio.

In practice, in order to obtain the results in FIGS. 3-4, the first neural network and the second neural network are trained with the synthetic data using an Adam optimizer (see [REF 10]) of a learning rate of 1e-4. The first neural network and the second neural network are trained for 200 epochs and 100 epochs separately. The real dataset is separated into training and testing splits with 80, 20 percentage. While the second neural network is frozen during the self-supervision stage, the first neural network is optimized with self-supervision losses in the training split using an Adam optimizer of learning rate 1e-5 for 30000 iterations.

The table in FIG. 3 shows that Fs-Net fails on transparent objects with imperfect sensor inputs and has the worst scores among the metrics. With the depth completion, the results are greatly improved in $3D_{25}$. However, the accurate estimation of the object pose for $3D_{50}$ is still limited. The present method achieves the best performance regarding all the metrics, including $3D_{50}$ for accurate object poses, including for transparent objects.

The table in FIG. 4 shows results obtained with the present method (row 3) compared to results obtained with the CPS++ method (row 2).

The CPS++ method (see [REF 3]) is chosen as it is representative of domain adaptation methods using self-supervision. In particular, the CPS++ method uses depth information on the object to self-supervise domain adaptation of a pose estimation network.

With reference to FIG. 4, the results show that the present method outperforms the CPS++ method on every metrics, in particular in terms of $3D_{25}$ and $3D_{50}$.

Although the present disclosure refers to specific exemplary embodiments, modifications may be provided to these examples. In particular, individual characteristics of the different illustrated/mentioned embodiments may be combined in additional embodiments. Therefore, the description and the drawings should be considered in an illustrative rather than in a restrictive sense.

**Claims**

1. A computer-implemented training method for a category-level pose estimation model configured to estimate object pose in an image, the method comprising:

   - (S10) training a first neural network of the model to generate an object pose estimation (116) and a latent code based on an input image (111) of a scene comprising the object, the latent code being a shape encoding representative of the shape of the object and the input image comprising depth information of the object and color information of the object;
   - (S20) training a second neural network of the model to generate a surface normal estimation (128) of the object based on the color information (121) and on polarization information (122) of the object, and to generate a contact edge estimation (124) comprising points in surroundings of the object; and
   - (S30) refining the pose estimation of the object by fine-tuning the first neural network using a first self-supervision loss based on the surface normal estimation (128) and on rendered surface normals (141) derived from the pose estimation and from the latent code of the first neural network, and a second self-supervision loss based on a predicted contact edge point cloud derived from the contact edge estimation (124) and on a rendered point cloud (145) derived from the pose estimation and the latent code;

   wherein a decoder (131) is applied to the object pose estimation and the latent code to generate a normalized object shape (132), from which a point cloud is reconstructed and fed to a differentiable renderer in order to obtain a rendered depth image (133), the rendered surface normals (141) and the rendered point cloud (145) being extracted from the rendered depth image (133).

2. The method of claim 1, wherein the step (S10) of training the first the neural network comprises:

- completing the depth information of the object in order to generate a predicted depth image (114) of the object, wherein the pose estimation (116) and the latent code are based on the predicted depth image (114) of the object.

3. The method of claim 2, wherein the step (S30) of refining the pose estimation of the object uses a third self-supervision loss based on the predicted depth image (114) of the object and a rendered depth image (147) derived from the latent code and the object pose estimation.

4. The method of any of claims 1 to 3, wherein the step (S30) of refining the pose estimation of the object uses a fourth self-supervision loss based on a rendered object mask (126) and on a ground truth mask (126) of the object, the rendered object mask (126) being derived from the pose estimation (116) and the latent code.

5. The method of any of claims 1 to 4, wherein the training of the first neural network comprises using shape priors representative of the object category in order to constrain the pose estimation.

6. The method of any of claims 1 to 5, wherein the training of the first neural network is supervised using ground truth data from a synthetically generated dataset comprising annotated object poses computed from a renderer applied to objects belonging to the object category.

7. The method of any of claims 1 to 6, wherein the training of the second neural network comprises using surface normal priors (123) representative of the object category in order to constrain the surface normal estimation.

8. The method of claim 7, wherein the surface normal priors comprise diffuse surface normal priors related to diffuse reflection of light by an object belonging to the object category, and/or specular surface normal priors related to specular reflection of light by an object belonging to the object category.

9. The method of any of claims 1 to 8, wherein the polarization information of the object comprises a degree of linear polarization (DOLP) and/or an angle of linear polarization (AOLP).

10. The method of claim any of claims 1 to 9, wherein the training of the second neural network is supervised using ground truth data from a synthetically generated dataset comprising annotated polarization information, wherein the annotation comprises surface normal priors of objects belonging to the object category.

11. The method of any of claims 1 to 10, wherein the second neural network is frozen before the step of refining the first neural network.

12. The method of any of claims 1 to 11, wherein the object is a transparent object.

13. A computer program set including instructions for executing the steps of a method of any of claims 1 to 12, when said program set is executed by at least one computer.

14. A recording medium readable by a computer and having recorded thereon at least one computer program including instructions for executing the steps of the method of any of claims 1 to 12.

**Patentansprüche**

1. Computerimplementiertes Trainingsverfahren für ein Lageschätzungsmodell auf Kategorieebene, das konfiguriert ist, um eine Objektlage in einem Bild zu schätzen, das Verfahren umfassend:

- (S10) Trainieren eines ersten neuronalen Netzes des Modells, um eine Objektlageschätzung (116) und einen latenten Code basierend auf einem Eingangsbilds (111) einer Szene, die das Objekt umfasst, zu erzeugen, wobei der latente Code eine Formkodierung ist, die repräsentativ für die Form des Objekts ist, und das Eingangsbild umfassend Tiefeninformationen des Objekts und Farbinformationen des Objekts;
- (S20) Trainieren eines zweiten neuronalen Netzes des Modells, um eine Oberflächennormalenschätzung (128) des Objekts basierend auf den Farbinformationenen (121) und den Polarisationsinformationen (122) des Objekts zu erzeugen, und um eine Kontaktkantenschätzung (124) zu erzeugen, umfassend Punkte in der Umgebung des Objekts; und
- (S30) Verfeinern der Lageschätzung des Objekts durch Feinabstimmen des ersten neuronalen Netzes unter Verwendung eines ersten Selbstüberwachungsverlusts basierend auf der Oberflächennormalenschätzung (128) und auf gerenderten Oberflächennormalen (141), die aus der Lageschätzung und aus dem latenten Code des ersten neuronalen Netzes abgeleitet sind, und eines zweiten Selbstüberwachungsverlusts basierend auf einer vorhergesagten Kontaktkantenpunktwolke, die aus der Kontaktkantenschätzung (124) abgeleitet ist, und auf einer gerenderten Punktwolke (145), die aus der Lageschätzung und dem latenten Code abgeleitet ist;

wobei ein Decoder (131) auf die Objektlageschätzung und den latenten Code angewendet wird, um eine normalisierte Objektform (132) zu erzeugen, aus der eine Punktwolke rekonstruiert und einem differenzierbaren Renderer zugeführt wird, um ein gerendertes Tiefenbild (133) zu erlangen, wobei die gerenderten Oberflächennormalen (141) und die gerenderte Punktwolke (145) aus dem gerenderten Tiefenbild (133) extrahiert werden.

2. Verfahren nach Anspruch 1, wobei der Schritt (S10) eines Trainierens des ersten neuronalen Netzes Folgendes umfasst:

- Vervollständigen der Tiefeninformationen des Objekts, um ein vorhergesagtes Tiefenbild (114) des Objekts zu erzeugen, wobei die Lageschätzung (116) und der latente Code auf dem vorhergesagten Tiefenbild (114) des Objekts basieren.

3. Verfahren nach Anspruch 2, wobei der Schritt (S30) eines Verfeinerns der Lageschätzung des Objekts einen dritten Selbstüberwachungsverlust verwendet, der auf dem vorhergesagten Tiefenbild (114) des Objekts und einem gerenderten Tiefenbild (147) basiert, das aus dem latenten Code und der Objektlageschätzung abgeleitet ist.

4. Verfahren nach einem der Ansprüche 1 bis 3, wobei der Schritt (S30) eines Verfeinerns der Lageschätzung des Objekts einen vierten Selbstüberwachungsverlust verwendet, der auf einer gerenderten Objektmaske (126) und auf einer Referenzmaske (126) des Objekts basiert, wobei die gerenderte Objektmaske (126) aus der Lageschätzung (116) und dem latenten Code abgeleitet wird.

5. Verfahren nach einem der Ansprüche 1 bis 4, wobei das Trainieren des ersten neuronalen Netzes ein Verwenden von Formprioritäten umfasst, die repräsentativ für die Objektkategorie sind, um die Lageschätzung zu beschränken.

6. Verfahren nach einem der Ansprüche 1 bis 5, wobei das Trainieren des ersten neuronalen Netzes überwacht wird, indem Referenzdaten aus einem synthetisch erzeugten Datensatz verwendet werden, umfassend kommentierte Objektlagen, die von einem Renderer berechnet werden, der auf Objekte angewandt wird, die zu der Objektkategorie gehören.

7. Verfahren nach einem der Ansprüche 1 bis 6, wobei das Trainieren des zweiten neuronalen Netzes ein Verwenden von Oberflächennormalenprioritäten (123) umfasst, die repräsentativ für die Objektkategorie sind, um die Oberflächennormalenschätzung zu beschränken.

8. Verfahren nach Anspruch 7, wobei die Oberflächennormalenprioritäten diffuse Oberflächennormalenprioritäten, die sich auf die diffuse Reflexion von Licht durch ein zur Objektkategorie gehörendes Objekt beziehen, und/oder spiegelnde Oberflächennormalenprioritäten, die sich auf die spiegelnde Reflexion von Licht durch ein zur Objektkategorie gehörendes Objekt beziehen, umfassen.

9. Verfahren nach einem der Ansprüche 1 bis 8, wobei die Polarisationsinformation des Objekts einen Grad linearer Polarisation (DOLP) und/oder einen Winkel linearer Polarisation (AOLP) umfasst.

10. Verfahren nach einem der Ansprüche 1 bis 9, wobei das Trainieren des zweiten neuronalen Netzes durch Verwenden von Referenzdaten aus einem synthetisch erzeugten Datensatz, umfassend mit kommentierte Polarisationsinformationen, überwacht werden, wobei der Kommentar oberflächennormale Prioritäten von Objekten umfasst, die zu der Objektkategorie gehören.

**11.** Verfahren nach einem der Ansprüche 1 bis 10, wobei das zweite neuronale Netz vor dem Schritt eines Verfeinerns des ersten neuronalen Netzes eingefroren wird.

**12.** Verfahren nach einem der Ansprüche 1 bis 11, wobei das Objekt ein transparentes Objekt ist.

**13.** Computerprogrammsatz, der Anweisungen zum Ausführen der Schritte eines Verfahrens nach einem der Ansprüche 1 bis 12 beinhaltet, wenn der Programmsatz von mindestens einem Computer ausgeführt wird.

**14.** Aufzeichnungsmedium, das von einem Computer lesbar ist und auf dem mindestens ein Computerprogramm aufgezeichnet ist, das Anweisungen zum Ausführen der Schritte des Verfahrens nach einem der Ansprüche 1 bis 12 beinhaltet.

**Revendications**

**1.** Procédé d'entraînement mis en œuvre par ordinateur pour un modèle d'estimation de pose au niveau catégorie configuré pour estimer une pose d'objet dans une image, le procédé comprenant :

- (S10) l'entraînement d'un premier réseau neuronal du modèle pour générer une estimation de pose d'objet (116) et un code latent basé sur une image d'entrée (111) d'une scène comprenant l'objet, le code latent étant un encodage de forme représentatif de la forme de l'objet et de l'image d'entrée comprenant de l'information de profondeur de l'objet et de l'information de couleur de l'objet ;
- (S20) l'entraînement d'un deuxième réseau neuronal du modèle pour générer une estimation de normale de surface (128) de l'objet sur la base de l'information de couleur (121) et d'une information de polarisation (122) de l'objet, et pour générer une estimation de bord de contact (124) comprenant des points dans les environs de l'objet ; et
- (S30) l'affinage de l'estimation de pose de l'objet par ajustement fin du premier réseau neuronal en utilisant une première perte d'auto-surveillance basée sur l'estimation de normale de surface (128) et sur des normales de surface rendues (141) dérivées de l'estimation de pose et du code latent du premier réseau neuronal, et une deuxième perte d'auto-surveillance basée sur un nuage de point de bord de contact prédit dérivé de l'estimation de bord de contact (124) et sur un nuage de point rendu (145) dérivé de l'estimation de pose et du code latent ;

un décodeur (131) étant appliqué sur l'estimation de pose d'objet et le code latent pour générer une forme d'objet normalisée (132), à partir de laquelle un nuage de point est reconstruit et délivré à un moteur de rendu différentiable afin d'obtenir une image de profondeur rendue (133), les normales de surface rendues (141) et le nuage de point rendu (145) étant extraits de l'image de profondeur rendue (133).

**2.** Procédé selon la revendication 1, selon lequel l'étape (S10) d'entraînement du premier réseau neuronal comprend :

- la finalisation de l'information de profondeur de l'objet afin de générer une image de profondeur prédite (114) de l'objet, l'estimation de pose (116) et le code latent étant basés sur l'image de profondeur prédite (114) de l'objet.

**3.** Procédé selon la revendication 2, selon lequel l'étape (S30) d'affinage de l'estimation de pose de l'objet utilise une troisième perte d'auto-surveillance basée sur l'image de profondeur prédite (114) de l'objet et une image de profondeur rendue (147) dérivée du code latent et de l'estimation de pose d'objet.

**4.** Procédé selon l'une quelconque des revendications 1 à 3, selon lequel l'étape (S30) d'affinage de l'estimation de pose de l'objet utilise une quatrième perte d'autosurveillance basée sur un masque d'objet rendu (126) et sur un masque de vérité de référence (126) de l'objet, le masque d'objet rendu (126) étant dérivé de l'estimation de pose (116) et du code latent.

**5.** Procédé selon l'une quelconque des revendications 1 à 4, selon lequel l'entraînement du premier réseau neuronal comprend l'utilisation de probabilités a priori de forme représentatives de la catégorie d'objet afin de contraindre l'estimation de pose.

**6.** Procédé selon l'une quelconque des revendications 1 à 5, selon lequel l'entraînement du premier réseau neuronal est supervisé en utilisant des données de vérité de référence provenant d'un ensemble de données générées de manière synthétique comprenant des poses d'objet annotées calculées à partir d'un moteur de rendu appliqué sur des objets appartenant à la catégorie d'objet.

7. Procédé selon l'une quelconque des revendications 1 à 6, selon lequel l'entraînement du deuxième réseau neuronal comprend l'utilisation de probabilités a priori de normale de surface (123) représentatives de la catégorie d'objet afin de contraindre l'estimation de normale de surface.

8. Procédé selon la revendication 7, selon lequel les probabilités a priori de normale de surface comprennent des probabilités a priori de normale de surface diffuse liées à une réflexion de lumière diffuse par un objet appartenant à la catégorie d'objet, et/ou des probabilités a priori de normale de surface spéculaire liées à une réflexion de lumière spéculaire par un objet appartenant à la catégorie d'objet.

9. Procédé selon l'une quelconque des revendications 1 à 8, selon lequel l'information de polarisation de l'objet comprend un degré de polarisation linéaire (DOLP) et/ou un angle de polarisation linéaire (AOLP).

10. Procédé selon l'une quelconque des revendications 1 à 9, selon lequel l'entraînement du deuxième réseau neuronal est supervisé en utilisant des données de vérité de référence provenant d'un ensemble de données générées de manière synthétique comprenant de l'information de polarisation annotée, l'annotation comprenant des probabilités a priori de normale de surface d'objets appartenant à la catégorie d'objet.

11. Procédé selon l'une quelconque des revendications 1 à 10, selon lequel le deuxième réseau neuronal est gelé avant l'étape d'affinage du premier réseau neuronal.

12. Procédé selon l'une quelconque des revendications 1 à 11, selon lequel l'objet est un objet transparent.

13. Ensemble de programme informatique comprenant des instructions pour exécuter les étapes d'un procédé selon l'une quelconque des revendications 1 à 12, quand ledit ensemble de programme est exécuté par au moins un ordinateur.

14. Support d'enregistrement lisible par un ordinateur et ayant enregistré dessus au moins un programme informatique comprenant des instructions pour exécuter les étapes du procédé selon l'une quelconque des revendications 1 à 12.

| | |
|---|---|
| S10 | Training a first neural network to generate a pose estimation of an object based on an input image comprising depth information and color information of the object |
| S20 | Training a second neural network to generate a surface normal estimation of the object based on the color information and on polarization information of the object |
| S30 | Refining the pose estimation of the object by fine-tuning the first neural network using a first self-supervision signal based on the surface normal estimation and rendered surface normals derived from a latent code of the first neural network, the latent code being representative of a shape of the object |

# FIG.1

**FIG.2**

| Metric | $3D_{25}$ ↑ | $3D_{50}$ ↑ | $3D_{75}$ ↑ | 5°5cm ↑ | 10°5cm ↑ | 15°5cm ↑ | 10°10cm ↑ | $Re_{avg}$ ↓ | $Te_{avg}$ ↓ |
|---|---|---|---|---|---|---|---|---|---|
| Fs-Net with sensor depth | 13.7 | 0.0 | 0.0 | 0.0 | 2.3 | 7.2 | 15.6 | 37.5 | 5.3 |
| Fs-Net with depth completion | 60.9 | 29.0 | 10.0 | 3.4 | 26.1 | 42.1 | 40.1 | 12.9 | 3.1 |
| Present method | **100** | **73.8** | **27.9** | **50.3** | **62.1** | **73.2** | **65.5** | **8.6** | **2.1** |

# FIG.3

| Metric | $3D_{25}$ ↑ | $3D_{50}$ ↑ | $3D_{75}$ ↑ | 5°5cm ↑ | 10°5cm ↑ | 15°5cm ↑ | 10°10cm ↑ | $Re_{avg}$ ↓ | $Te_{avg}$ ↓ |
|---|---|---|---|---|---|---|---|---|---|
| CPS++ | 57.2 | 29.1 | 12.8 | 0.0 | 27.4 | 34.3 | 46.9 | 10.0 | 39.2 |
| Present method | **100.0** | **73.8** | **27.9** | **50.3** | **62.1** | **73.2** | **65.5** | **8.6** | **2.1** |

# FIG.4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CHEN, WEI** ; **JIA, XI** ; **CHANG, HYUNG JIN et al.** Fs-net: Fast shape-based network for category-level 6d object pose estimation with decoupled rotation mechanism. *Proceedings of the IEEE/CVF Conference on Computer Vision and Pattern Recognition*, 2021, 1581-1590

- Polarimetric pose prediction. **GAO, DAOYI** ; **LI, YITONG** ; **RUHKAMP, PATRICK et al.** Proceedings. Springer Nature, 23 October 2022, 735-752

- **MANHARDT, FABIAN** ; **WANG, GU** ; **BUSAM, BENJAMIN et al.** CPS++: Improving class-level 6D pose and shape estimation from monocular images with self-supervised learning. *arXiv preprint arXiv:2003.05848*, 2020

- **WANG, HE** ; **SRIDHAR, SRINATH** ; **HUANG, JINGWEI et al.** Normalized object coordinate space for category-level 6d object pose and size estimation. *Proceedings of the IEEE/CVF Conference on Computer Vision and Pattern Recognition.*, 2019, 2642-2651

- **WANG, PENGYUAN** ; **GARATTONI, LORENZO** ; **MEIER, SVEN et al.** CroCPS: Addressing Photometric Challenges in Self-Supervised Category-Level 6D Object Poses with Cross-Modal Learning.. *Proceedings of the British Machine Vision Conference*, 2022

- **HE, KAIMING** ; **ZHANG, XIANGYU** ; **REN, SHAOQING et al.** Deep residual learning for image recognition. *Proceedings of the IEEE conference on computer vision and pattern recognition*, 2016, 770-778

- Deep shape from polarization. **BA, YUNHAO** ; **GILBERT, ALEX** ; **WANG, FRANKLIN et al.** Proceedings. Springer International Publishing, 554-571

- **ZHANG, CHAONING** ; **ZHENG, SHENG** ; **LI, CHENGHAO et al.** A Survey on Segment Anything Model (SAM): Vision Foundation Model Meets Prompt Engineering. *arXiv preprint arXiv:2306.06211*, 2023

- **LI, ZHENYU** ; **CHEN, ZEHUI** ; **LIU, XIANMING et al.** Depthformer: Exploiting long-range correlation and local information for accurate monocular depth estimation. *arXiv preprint arXiv:2203.14211*, 2022

- **KINGMA, DIEDERIK P.** ; **BA, JIMMY**. Adam: A method for stochastic optimization. *arXiv preprint arXiv:1412.6980*, 2014

- **DENNINGER, MAXIMILIAN** ; **SUNDERMEYER, MARTIN** ; **WINKELBAUER, DOMINIK et al.** Blenderproc. *arXiv preprint arXiv:1911.01911*, 2019

- **JAKOB, WENZEL** ; **SPEIERER, SÉBASTIEN** ; **ROUSSEL, NICOLAS et al.** DR. JIT: a just-in-time compiler for differentiable rendering. *ACM Transactions on Graphics (TOG)*, 2022, vol. 41 (4), 1-19

- **JUNG, HYUNJUN** ; **WU, SHUN-CHENG** ; **RUHKAMP, PATRIC et al.** HouseCat6D--A Large-Scale Multi-Modal Category Level 6D Object Pose Dataset with Household Objects in Realistic Scenarios. *arXiv preprint arXiv:2212.10428*, 2022

- **RANFTL, RENÉ** ; **BOCHKOVSKIY, ALEXEY** ; **KOLTUN, VLADLEN**. Vision transformers for dense prediction. *Proceedings of the IEEE/CVF international conference on computer vision.*, 2021, 12179-12188

- **FUJI TSANG, CLEMENT et al.** *Kaolin: A pytorch library for accelerating 3d deep learning research*, 2022, https://github.com/NVIDIAGameWorks/kaolin

- **GROUEIX, THIBAULT** ; **FISHER, MATTHEW** ; **KIM, VLADIMIR G et al.** A papier-mâché approach to learning 3d surface generation. *Proceedings of the IEEE conference on computer vision and pattern recognition.*, 2018, 216-224